# EUROPEAN PATENT APPLICATION

(11) **EP 4 567 719 A1**
(43) Date of publication of application: **11.06.2025**
(21) Application number: 24218085.9
(22) Date of filing: 06.12.2024
(51) Int. Cl.: G06T 5/90, G06T 5/94

(54) **REAL-TIME LOCAL TONE MAPPING**

(30) Priority: 07.12.2023 US 202363607270 P
(71) Applicant: GOOGLE LLC, Mountain View CA 94043 (US)
(72) Inventor: Boukortt, Sami, 8002 Zürich (CH); Alakuijala, Jyrki Antero, 8002 Zürich (CH); Versari, Luca, 8002 Zürich (CH); Szabadka, Zoltan, 1023 Budapest (HU); Firsching, Moritz, 8002 Zürich (CH); Kliuchnikov, Evgenii, 8002 Zürich (CH)
(74) Representative: Maikowski & Ninnemann Patentanwälte Partnerschaft mbB

(57) **Abstract**

A method including receiving an image having a first dynamic range, determining the first dynamic range fails to meet a criteria, downsampling a region of the image, blurring the downsampled region of the image, upsampling the blurred region of the image, generating a tone-mapping curve based on the upsampled image, and generating a transformed image having a second dynamic range by transforming the image using the tone-mapping curve.

## Description

### CROSS-REFERENCE TO RELATED APPLICATION

This application claims the benefit and priority to U.S. Provisional Application No. 63/607,270, filed on December 7, 2023.

### FIELD

Implementations relate to mapping between dynamic ranges in images and/or video.

### BACKGROUND

Modern tools such as cameras, displays and photo editing software are becoming increasingly higher in dynamic range capabilities. However, there is a compatibility gap between devices. Particularly, higher dynamic range content often degrades significantly when viewed on a lower dynamic range display.

### SUMMARY

Example implementations include a technique or tool that mitigates the quality degradation when viewing higher dynamic range content on a lower dynamic range display.

In a general aspect, a device, a system, a non-transitory computer-readable medium (having stored thereon computer executable program code which can be executed on a computer system), and/or a method can perform a process with a method including receiving an image having a first dynamic range, determining the first dynamic range fails to meet a criteria, downsampling a region of the image, blurring the downsampled region of the image, upsampling the blurred region of the image, generating a tone-mapping curve based on the upsampled image, and generating a transformed image having a second dynamic range by transforming the image using the tone-mapping curve. In some implementations, the transformed image can be displayed on a display having the second (or lower) dynamic range. Transforming the dynamic range of the image can include transforming the image from a first (or higher) dynamic range to a second (or lower) dynamic range.

### BRIEF DESCRIPTION OF THE DRAWINGS

Example implementations will become more fully understood from the detailed description given herein below and the accompanying drawings, wherein like elements are represented by like reference numerals, which are given by way of illustration only and thus are not limiting of the example implementations.
FIGS. 1A, 1B, and 1C are example image processing apparatus's according to at least one example implementation.
FIG. 2 illustrates a block diagram of a data/signal flow according to at least one example implementation.
FIG. 3 illustrates a flow diagram according to at least one example implementation.
FIGS. 4A and 4B illustrates mapping curves according to at least one example implementation.
FIG. 5 illustrates a block diagram of a method of transforming a dynamic range of an image according to at least one example implementation.
FIG. 6 illustrates a block diagram of a method of transforming a dynamic range of an image according to at least one example implementation.

It should be noted that these Figures are intended to illustrate the general characteristics of methods, and/or structures utilized in certain example implementations and to supplement the written description provided below. These drawings are not, however, to scale and may not precisely reflect the precise structural or performance characteristics of any given implementation and should not be interpreted as defining or limiting the range of values or properties encompassed by example implementations. For example, the positioning of modules and/or structural elements may be reduced or exaggerated for clarity. The use of similar or identical reference numbers in the various drawings is intended to indicate the presence of a similar or identical element or feature.

### DETAILED DESCRIPTION

The content (e.g., image) processing capabilities of cameras, displays and photo editing software increasingly include higher and higher dynamic range. However, there can be a dynamic range compatibility gap between components and/or devices. Particularly, higher dynamic range content often degrades significantly when viewed on a lower dynamic range display. Accordingly, at least one technical problem associated with content processing is transforming (or converting) content having a first (e.g., higher) dynamic range to content having a second (e.g., lower) dynamic range. For example, a technical problem associated with content processing can be transforming (or converting) visual content having a first (e.g., higher) dynamic range to content having a second (e.g., lower) dynamic range. At least one technical solution can be to transform content and/or visual content having a first (e.g., higher) dynamic range to content having a second (e.g., lower) dynamic range using a pixel-based tone-mapping process. For example, a technical solution can be to transform visual content having a first (e.g., higher) dynamic range to content having a second (e.g., lower) dynamic range using a pixel-based tone-mapping process. At least one technical benefit of the technical solution is minimizing the quality degradation when displaying transformed content (e.g., a transformed image).

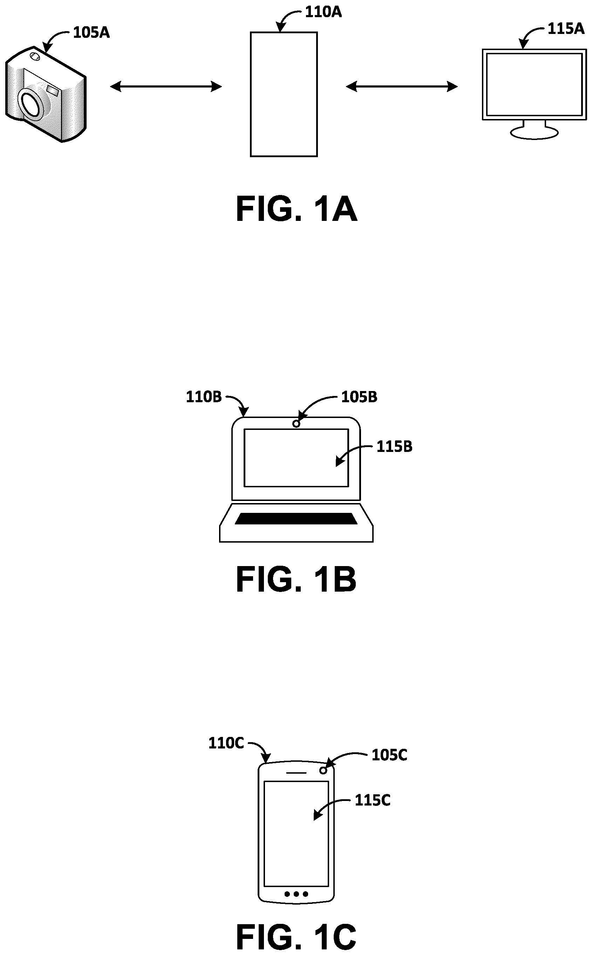

FIGS. 1A, 1B, and 1C are example image processing apparatus's according to at least one example implementation. As shown in FIG. 1A, a camera 105A is communicatively coupled to a computing device 110A which is communicatively coupled to a display 115A. As shown in FIG. 1B, a computing device 110B includes a camera 105B and a display 115B. As shown in FIG. 1C, a mobile device 110C includes a camera 105C and a display 115C. In FIG. 1A, the camera 105A, the computing device 110A, and the display 115A are separate devices. In FIGS. 1B and 1C, the camera 105B, 105C and the display 115B, 115C are components of the computing device 110B, 110C. The apparatus's shown in FIGS. 1A, 1B, and 1C are just a few examples of apparatus's that can be configured to perform the implementations described herein.

Referring to FIG. 1A, the camera 105A can be configured to generate content (e.g., capture an image) having a first dynamic range and communicating the content to the computing device 110A. The computing device 110A can receive the content and determine that the content has a dynamic range (the first dynamic range) that fails to meet a criteria. For example, the criteria can be that the dynamic range of the content is (or is based on) different than the dynamic range capabilities of display 115A. For example, the criteria can be that the dynamic range of the content is (or is based on) higher than the dynamic range capabilities of display 115A. to content having a second (e.g., lower) dynamic range. Computing device 110A can be configured to transform the dynamic range of the content to content having a second (e.g., lower) dynamic range. For example, computing device 110A can be configured to transform the dynamic range of the content to content having a second (e.g., lower) dynamic range using a pixel-based tone-mapping process (as described in more detail below). Computing device 110A can communicate the content having the second dynamic range and the content can be displayed on display 115A.

Referring to FIGS. 1B and 1C, the camera 105B, 105C can be configured to generate content (e.g., capture an image) having a first dynamic range and communicating the content to the computing device 110A. The computing device 110B and/or mobile device 110C can receive the content and determine that the content has a dynamic range (the first dynamic range) that fails to meet a criteria. For example, the criteria can be that the dynamic range of the content is (or is based on) different than the dynamic range capabilities of display 115B, 115C. For example, the criteria can be that the dynamic range of the content is (or is based on) higher than the dynamic range capabilities of display 115B, 115C. to content having a second (e.g., lower) dynamic range. Computing device 110A and/or mobile device 110C can be configured to transform the dynamic range of the content to content having a second (e.g., lower) dynamic range. For example, computing device 110B and/or mobile device 110C can be configured to transform the dynamic range of the content to content having a second (e.g., lower) dynamic range using a pixel-based tone-mapping process (as described in more detail below). Computing device 110B and/or mobile device 110C can communicate the content having the second dynamic range and the content can be displayed on display 115B, 115C.

Some implementations relate to mapping content, for example, images and/or video, from a first (e.g., higher) dynamic range to a second (e.g., lower) dynamic range. Cameras and displays can have a narrow dynamic range. For example, cameras and/or displays can reproduce less information than human eyes can process. In other words, cameras and/or displays can process a lower dynamic range than the human eye is capable of seeing. However, the dynamic range capabilities of cameras and/or displays is advancing with higher dynamic range techniques. As an example, the higher dynamic range format can correspond to the high dynamic range (HDR) standard and the lower dynamic range format can correspond to the standard dynamic range (SDR) standard.

Modern components and/or tools such as cameras, displays and photo editing software are becoming increasingly capable of processing higher dynamic range content, video and images. However, a problem is that there can be a compatibility gap between old and new devices. Particularly, the new higher dynamic range content often degrades significantly when viewed on a lower dynamic range display. Further, some displays can be configured to reduce dynamic range under predefined conditions. For example, some displays can be configured to reduce dynamic range in high temperature conditions, in low power conditions, in low (or high) light intensity conditions, and/or the like. Example implementations described herein can mitigate the quality degradation when viewing high dynamic range content on a lower dynamic range display. In some implementations, the user viewing experience can be improved by mitigating the quality degradation when viewing high dynamic range content on a lower dynamic range display.

Some implementations include a process and/or system that can be incorporated and/or implemented in a central processing unit (CPU). Some implementations include a process and/or system that can be incorporated and/or implemented in a shared processor. Some implementations include a process and/or system that can be incorporated and/or implemented in a special purpose processor.

Some implementations include a process and/or system that can be incorporated and/or implemented in a graphical processing unit (GPU). Some implementations can improve GPU processing time by being, for example, 30x faster than an industry standard approach (e.g., exposure-fusion). Some implementations can generate aesthetically higher quality results when compared to the industry standard approach (e.g., exposure-fusion). Some implementations can generate a lower dynamic range signal described in a higher dynamic range format that can be displayed as if a content, image, and/or video was generated in a lower dynamic range format. In other words, the content, image, and/or video can be displayed as if the content, image, and/or video was generated as a lower dynamic range image after the transformation from the higher dynamic range format to the lower dynamic range format. Some implementations, when processed on a GPU implementation, can be executed in, for example, a few milliseconds. Whereas, using existing techniques, a single-threaded local CPU tone maps a photograph in, for example, more than 500 milliseconds. Therefore, example implementations can be used as the default for transforming higher dynamic range format content for viewing on lower dynamic range format displays in many operating systems and/or applications.

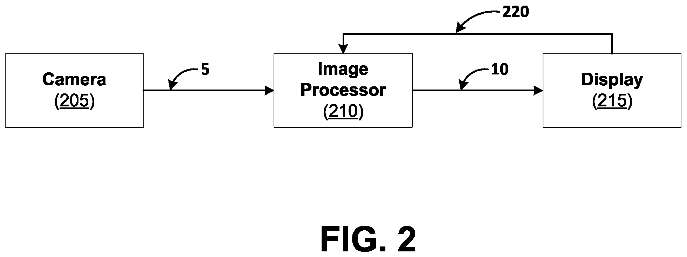

FIG. 2 illustrates a block diagram of a data and/or signal flow according to an example implementation. As shown in FIG. 2, the data and/or signal flow includes a camera 205 block, an image processor 210 block, and a display 215 block. In some implementations, the camera 205 can generate an image 5 (content, video and/or video frame). In some implementations, image 5 can be in a higher dynamic range format than display 215 is capable of processing. Accordingly, image processor 210 can be configured to transform image 5 from the higher dynamic range format to a lower dynamic range format as transformed image 10 for processing and viewing on display 215. In some implementations, the higher dynamic range format can be HDR and the lower dynamic range format can be SDR. In some implementations, the image processor 210 can be a GPU.

In some implementations, the capabilities of the display 215 can be variable and/or unknown by the image processor 210 (e.g., unknown prior to processing image 5). Therefore, signal 220 can be configured to communicate display 215 capabilities (e.g., dynamic range) to the image processor 210. Alternatively (or in addition), the display 215 capabilities can be known (e.g., stored in a memory) of the image processor 210. In some implementations, display 215 capabilities can be variable. For example, some displays can be configured to reduce dynamic range under predefined conditions. For example, some displays can be configured to reduce dynamic range in high temperature conditions, in low power conditions, in low (or high) light intensity conditions, and/or the like. Accordingly, a condition (e.g., high temperature) can cause display 215 to reduce dynamic range and display 215 can communicate data associated with the reduced dynamic range to image processor 210 via signal 220. In other words, in response to determining the dynamic range is reduced (or reducing the dynamic range), the display 215 can communicate (e.g., a value representing) the reduced dynamic range to the image processor 210 via (or as) signal 220. Further, the image processor 210 can reduce the dynamic range in response to receiving signal 220.

Some implementations include a process and/or system that can include the following steps: first, for each non-overlapping region (e.g., 128 pixel ×128 pixel region) of the image (e.g., image 5), the logarithm of the maximum luminance is calculated to generate a downsampled image. The resulting downsampled image may then be blurred, upsampled to the size of the original image, and a global offset applied so that the luminance map still bounds above every local maximum luminance in spite of the blurring. Blurring can be an operation that is done in a subresolution image, i.e., for example 32x32-times less pixels to process than in the image. Blurring can include multiplying a pixel value with the values of a structural element of the subresolution image, and in each location (or non-overlapping region) the maximum of such values is maintained. In other words, different objects in an image (e.g., trees, sky, buildings, humans, and the like) can be associated with values used in the multiplication of the blurring process. Alternatively, or in addition, in some implementations blurring can be replaced or extended by applying a gray-scale dilation or other gray-scale morphology operations. Accordingly, blurring is sometimes called or referred to as gray-scale dilation or gray-scale morphology.

Tone mapping can include adjusting the brightness and contrast of an image (e.g., HDR image) having a first (or higher) dynamic range to make the image look natural and detailed on display having a second (or lower) dynamic range. In other words, tone mapping can reduce the tonal values within an image to make the image clearly viewable on a display having a lower dynamic range. In some implementations, the tone mapping can be referred to as local tone mapping or pixelwise tone mapping. This refers to using local or pixel operators that use a pixel's position in the light or dark areas of an image. Pixels are then treated according to their spatial characteristics and much more detail is associated with each pixel. The displayed image is more desirable because the image has more visible detail with this local tone mapping technique. Accordingly, each pixel can have an associated tone-mapping curve used in a tone mapping or local tone mapping process.

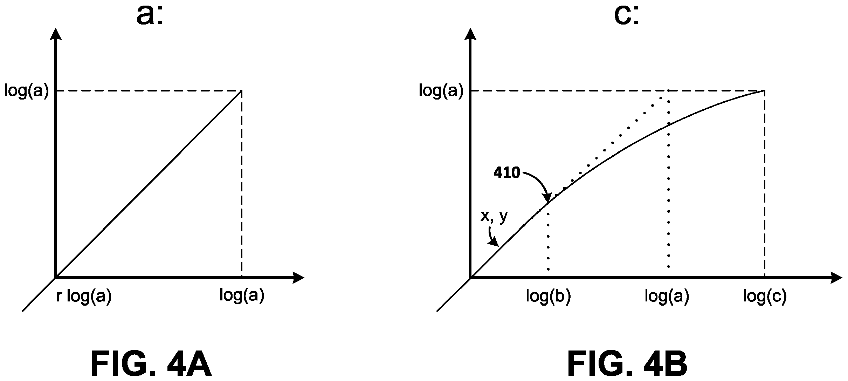

A tone-mapping curve can then be generated for each pixel by first computing a knee point (or point where the curve visibly bends see FIG. 4B 410) of the tone for each pixel that varies linearly between a first value (e.g., 0.15·log(250)) and a second value (e.g., log(250)) as a local maximum (e.g., a log(local maximum of luminance)) that varies from the second value (e.g., log(250)) or less to a third value (e.g., log(10000)), see FIG. 4B. A local maximum can be a brightest pixel(s) within a small neighborhood of pixels in the image. In other words, the tone mapping curve can be a nonlinear tone mapping curve (e.g., in log-log coordinates) can be the identity up to the knee point of the curve, and then a weighted mixture of (a) the identity and (b) a linear segment from a point (x, y). In some implementations, referring to FIG. 4B as an example, the nonlinear tone mapping curve can be logarithmic (e.g., in log-log coordinates). Therefore, the linear segment from a point (x, y) can equal (knee point, knee point) to (log(local maximum), log(250)). In some implementations, the weight of (b) can be equal to (log(luminance) - knee point) / (log(local maximum) - knee point), and the two weights can sum to one.

Finally, each pixel's (of the image) tone curve can be applied to the pixel's luminance by (1) computing the pixel's luminance as an appropriately weighted sum of the pixel's red, green and blue components, (2) applying the tone curve to that luminance value to get the new luminance, (3) computing the ratio of the new luminance to the original luminance, and (4) multiplying the red, green and blue components by that ratio. This may produce out-of-gamut colors. Therefore, some implementations can include applying a gamut mapping algorithm to the transformed image (e.g., a post-processing step associated with transformed image 10). In other words, an allowed value associated with the color (e.g., red, green and blue) of a pixel could have a range of 0-100. If, after transforming the pixel luminance, a color is out of range (e.g., -50 or 150), the color needs to be brought within range. This post process can use a gamut mapping algorithm. A simple gamut mapping algorithm can be a clipping algorithm where the pixel value is set to the minimum or maximum of the range. However, more complex algorithms can be used to maintain scene characteristics (e.g., shadows). These more complex gamut mapping algorithms can consider surrounding pixels in the algorithm.

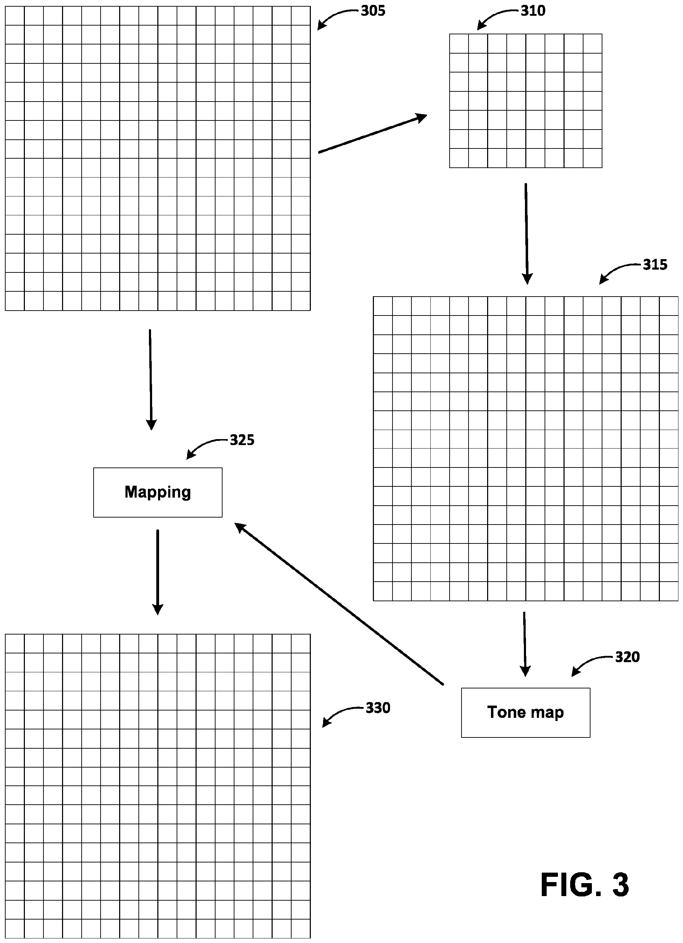

FIG. 3 illustrates a flow diagram according to an example implementation. As shown on FIG. 3, an image 305 (e.g., captured by a camera, received from a camera, received from a memory, and/ or the like) is downsampled as downsampled image 310. Image 305 is illustrated as including a plurality of blocks. Each block can represent a pixel, a group of pixels, a block of pixels, and the like. In some implementations, each non-overlapping region (e.g., 128 pixel ×128 pixel region) of image 305 can be downsampled. For example, the logarithm of the maximum luminance (e.g., block-wise maximum luminance) of the non-overlapping region can be calculated to generate the downsampled image 310.

The downsampled image 310 can be upsampled to the same resolution of image 305 as upsampled image 315. In some implementations, the downsampled image 310 can be blurred and upsampled to the size of image 305, and a global offset can be applied so that the luminance map still bounds above every local maximum. The upsampled image 315 can be used to generate a tone map 320. In some implementations, the tone map 320 can be implemented as a tone-mapping curve(s). For example, FIGS. 4A and 4B can illustrate mapping curves (or tone-mapping curves) according to some implementations.

Referring to FIGS. 4A and 4B a tone-mapping curve can be generated for each pixel by computing a knee point 410 that varies linearly between rlog(a) (e.g., 0.15·log(250)) and a log(a) (e.g., log(250)) as a local maximum (e.g., a log(local maximum of luminance)) that varies from log(a) (e.g., log(250)) or less (e.g., log(b) (e.g., log(100)) to log(c) (e.g., log(4000)). The nonlinear tone mapping curve (e.g., in log-log coordinates) can be the identity up to the knee point 410 of the curve, and then a weighted mixture of (a) the identity and (b) a linear segment from (x, y). In some implementations, the nonlinear tone mapping curve can be logarithmic (e.g., in log-log coordinates). Therefore, the linear segment from (x, y) can equal (knee point, knee point) to (log(local maximum), log(a)). In some implementations, the weight of (b) can be equal to (x - knee point) / (log(local maximum) - knee point), and the two weights can sum to one.

Returning to FIG. 3, image 305 can be mapped 325 to a transformed image 330. In the mapped 325 block each pixel of image 305 an individualized tone curve can be applied to the pixel's luminance by (1) computing the pixel's luminance as an appropriately weighted sum of the pixel' s red, green and blue components, (2) applying the tone map 320 (e.g., the tone-mapping curve from FIGS. 4A and 4B) to the luminance value to get the new luminance, (3) computing the ratio of the new luminance to the original luminance, and (4) multiplying the red, green and blue components by the ratio from (3). This may produce out-of-gamut colors. Therefore, some implementations can include applying a gamut mapping algorithm to the transformed image 330 (e.g., a post-processing step).

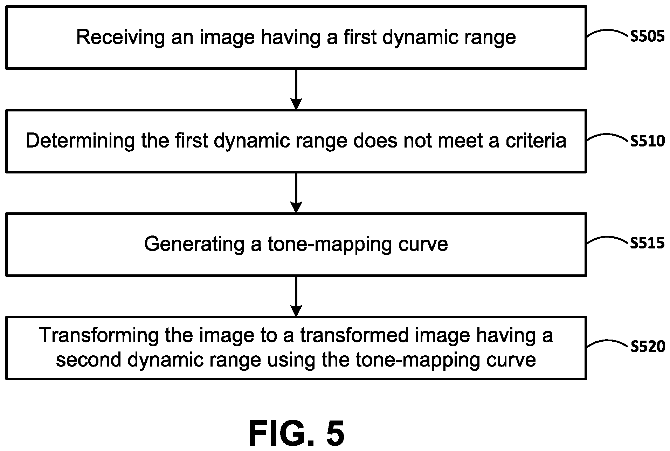

Example 1. FIG. 5 illustrates a block diagram of a method of transforming a dynamic range of an image according to an example implementation. Transforming the dynamic range of the image can include transforming the image from a first (or higher) dynamic range to a second (or lower) dynamic range. As shown in FIG. 5, in step S505 an image having a first dynamic range is received. In step S510 the first dynamic range is determined to not meet a criterion. In step S515 a tone-mapping curve is generated. In step S520 the image is transformed to generate a transformed image having a second dynamic range using the tone-mapping curve. In some implementations, the transformed image can be displayed on a display having the second (or lower) dynamic range.

Example 2. The method of Example 1, wherein the first dynamic range can be associated with a high dynamic range standard and the second dynamic range can be associated with a standard dynamic range standard.

Example 3. The method of Example 1, wherein determining the first dynamic range does not meet the criteria can include determining the first dynamic range is greater than a dynamic range of a display intended for display of the image.

Example 4. The method of Example 1, wherein generating the tone-mapping curve can include downsampling the image based on a logarithm of the maximum luminance of a non-overlapping region of the image.

Example 5. The method of Example 4, wherein generating the tone-mapping curve can include upsampling the downsampled image and blurring the pixels of the upsampled image.

Example 6. The method of Example 1, wherein the transforming of the image can include computing a pixel luminance as a weighted sum of the pixel's red, green and blue components, applying the tone-mapping curve to the pixel luminance to generate a new luminance, computing a ratio of the new luminance to an original luminance, and multiplying the red, green and blue components by the ratio.

Example 7. The method of Example 1, wherein the transforming of the image can include applying a gamut mapping algorithm to the transformed image.

Example 8. A method can include any combination of one or more of Example 1 to Example 7.

Example 9. A non-transitory computer-readable storage medium comprising instructions stored thereon that, when executed by at least one processor, are configured to cause a computing system to perform the method of any of Examples 1-8.

Example 10. An apparatus comprising means for performing the method of any of Examples 1-8.

Example 11. An apparatus comprising at least one processor and at least one memory including computer program code, the at least one memory and the computer program code configured to, with the at least one processor, cause the apparatus at least to perform the method of any of Examples 1-8.

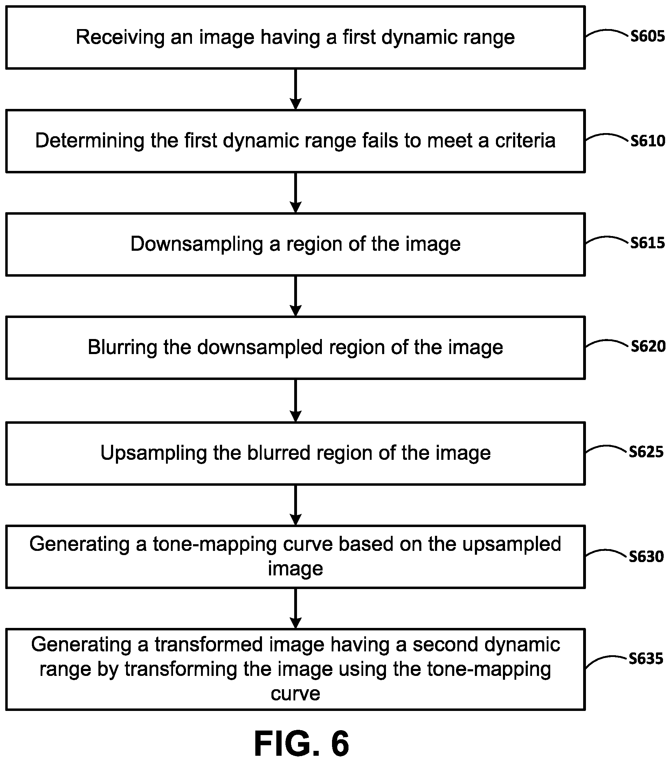

Example 12. FIG. 6 illustrates a block diagram of a method of transforming a dynamic range of content according to an example implementation. Transforming the dynamic range of the image can include transforming the image from a first (or higher) dynamic range to a second (or lower) dynamic range. As shown in FIG. 6, in step S605 receiving an image having a first dynamic range. In step S610 determining the first dynamic range fails to meet a criteria. In step S615 downsampling a region of the image. In step S620 blurring the downsampled region of the image. In step S625 upsampling the blurred region of the image. In step S630 generating a tone-mapping curve based on the upsampled image. In some implementations, each pixel of the image can have an associated tone-mapping curve used in a tone mapping or local tone mapping process. Therefore, generating a tone-mapping curve can include generating a tone-mapping curve for each pixel of the upsampled image. In step S635 generating a transformed image having a second dynamic range by transforming the image using the tone-mapping curve. In some implementations, the transformed image can be displayed on a display having the second (or lower) dynamic range.

Example 13. The method of Example 12, wherein the first dynamic range can be associated with a high dynamic range standard, and the second dynamic range can be associated with a standard dynamic range standard. In some implementations of the proposed solution, the method may include the first dynamic range being associated with a high dynamic range standard, and the second dynamic range being associated with a standard dynamic range standard. Accordingly, the second dynamic range being associated with a second (default) dynamic range and the first dynamic range being associated with a first dynamic range standard higher than the second dynamic range.

Example 14. The method of Example 12, wherein the determining of the first dynamic range does fails to meet the criteria can include determining the first dynamic range is greater than a dynamic range of a display intended for display of the image.

Example 15. The method of Example 12 can further include determining an offset and applying the offset to the upsampled image. In some implementations of the proposed solution, the method may include determining an offset; and applying the offset to the upsampled image. This may include applying a predetermined or calculated offset value with luminance values of the upsampled image, e.g., luminance values for all pixels of the upsampled image.

Example 16. The method of Example 12, wherein the generating of the tone-mapping curve can include generating a tone-mapping curve for each pixel of the upsampled image.

Example 17. The method of Example 16, wherein the generating of the tone-mapping curve for each pixel can includes generating a knee point for a selected pixel and generating the tone-mapping curve as a first curve to the knee point and a second curve after the knee point. In some implementations a knee point can be point where the curve (e.g., log curve) visibly bends, see FIG. 4B 410, of the tone for each pixel.

Example 18. The method of Example 17, wherein the generating of the knee point can includes determining a local maximum of luminance for the selected pixel and generating the knee point as log(local maximum of luminance).

Example 19. The method of Example 12, wherein the downsampling of the region of the image can includes downsampling a non-overlapping region of the image based on a logarithm of a maximum luminance.

Example 20. The method of Example 12, wherein the transforming of the image can include computing a pixel luminance as (or computing an original luminance of a pixel of the image as) a weighted sum of pixel's red, green and blue components, applying the tone-mapping curve to the pixel luminance to generate a new luminance, computing a ratio of the new luminance to an original luminance, and multiplying the red, green and blue components by the ratio. Multiplying the red, green and blue components by the ratio can include multiplying a numeric value that represents the pixel by a numeric value representing the ration in order to change the pixel luminance.

Example 21. The method of Example 12, wherein the transforming of the image can include applying a gamut mapping algorithm to the transformed image.

Example 22. A method can include any combination of one or more of Example 12 to Example 21.

Example 23. A non-transitory computer-readable storage medium comprising instructions stored thereon that, when executed by at least one processor, are configured to cause a computing system to perform the method of any of Examples 12-22.

Example 24. An apparatus comprising means for performing the method of any of Examples 12-22.

Example 25. An apparatus comprising at least one processor and at least one memory including computer program code, the at least one memory and the computer program code configured to, with the at least one processor, cause the apparatus at least to perform the method of any of Examples 12-22.

Example 25. An apparatus comprising a camera configured to generate a first image having a first dynamic range; a display configured to display a second image having a second dynamic range; and a processor configured to downsample a region of the first image, blurr the downsampled region of the first image, upsample the blurred region of the first image, generate a tone-mapping curve based on the upsampled image;, transform the first image using the tone-mapping curve to generate the second image, and render the second image on the display.

Example 26. The apparatus of Example 26, the processor can be further configured to receive a trigger to store the first image and cause the first image to be stored in a memory associated with the apparatus.

Example 27. The apparatus of Example 26 the processor can be further configured to perform any of the step of any combination of one or more of Example 1 to Example 21.

Example implementations can include a non-transitory computer-readable storage medium comprising instructions stored thereon that, when executed by at least one processor, are configured to cause a computing system to perform any of the methods described above. Example implementations can include an apparatus including means for performing any of the methods described above. Example implementations can include an apparatus including at least one processor and at least one memory including computer program code, the at least one memory and the computer program code configured to, with the at least one processor, cause the apparatus at least to perform any of the methods described above.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms "machine-readable medium" "computer-readable medium" refers to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here can be implemented on a computer having a display device (a LED (light-emitting diode), or OLED (organic LED), or LCD (liquid crystal display) monitor/screen) for displaying information to the user and a keyboard and a pointing device (e.g., a mouse or a trackball) by which the user can provide input to the computer. Other kinds of devices can be used to provide for interaction with a user as well; for example, feedback provided to the user can be any form of sensory feedback (e.g., visual feedback, auditory feedback, or tactile feedback); and input from the user can be received in any form, including acoustic, speech, or tactile input.

The systems and techniques described here can be implemented in a computing system that includes a back end component (e.g., as a data server), or that includes a middleware component (e.g., an application server), or that includes a front end component (e.g., a client computer having a graphical user interface or a Web browser through which a user can interact with an implementation of the systems and techniques described here), or any combination of such back end, middleware, or front end components. The components of the system can be interconnected by any form or medium of digital data communication (e.g., a communication network). Examples of communication networks include a local area network ("LAN"), a wide area network ("WAN"), and the Internet.

The computing system can include clients and servers. A client and server are generally remote from each other and typically interact through a communication network. The relationship of client and server arises by virtue of computer programs running on the respective computers and having a client-server relationship to each other.

A number of implementations have been described. Nevertheless, it will be understood that various modifications may be made without departing from the spirit and scope of the specification.

In addition, the logic flows depicted in the figures do not require the particular order shown, or sequential order, to achieve desirable results. In addition, other steps may be provided, or steps may be eliminated, from the described flows, and other components may be added to, or removed from, the described systems. Accordingly, other implementations are within the scope of the following claims.

While certain features of the described implementations have been illustrated as described herein, many modifications, substitutions, changes and equivalents will now occur to those skilled in the art. It is, therefore, to be understood that the appended claims are intended to cover all such modifications and changes as fall within the scope of the implementations. It should be understood that they have been presented by way of example only, not limitation, and various changes in form and details may be made. Any portion of the apparatus and/or methods described herein may be combined in any combination, except mutually exclusive combinations. The implementations described herein can include various combinations and/or sub-combinations of the functions, components and/or features of the different implementations described.

While example implementations may include various modifications and alternative forms, implementations thereof are shown by way of example in the drawings and will herein be described in detail. It should be understood, however, that there is no intent to limit example implementations to the particular forms disclosed, but on the contrary, example implementations are to cover all modifications, equivalents, and alternatives falling within the scope of the claims. Like numbers refer to like elements throughout the description of the figures.

Some of the above example implementations are described as processes or methods depicted as flowcharts. Although the flowcharts describe the operations as sequential processes, many of the operations may be performed in parallel, concurrently or simultaneously. In addition, the order of operations may be re-arranged. The processes may be terminated when their operations are completed, but may also have additional steps not included in the figure. The processes may correspond to methods, functions, procedures, subroutines, subprograms, etc.

Methods discussed above, some of which are illustrated by the flow charts, may be implemented by hardware, software, firmware, middleware, microcode, hardware description languages, or any combination thereof. When implemented in software, firmware, middleware or microcode, the program code or code segments to perform the necessary tasks may be stored in a machine or computer readable medium such as a storage medium. A processor(s) may perform the necessary tasks.

Specific structural and functional details disclosed herein are merely representative for purposes of describing example implementations. Example implementations, however, be embodied in many alternate forms and should not be construed as limited to only the implementations set forth herein.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of example implementations. As used herein, the term and/or includes any and all combinations of one or more of the associated listed items.

It will be understood that when an element is referred to as being connected or coupled to another element, it can be directly connected or coupled to the other element or intervening elements may be present. In contrast, when an element is referred to as being directly connected or directly coupled to another element, there are no intervening elements present. Other words used to describe the relationship between elements should be interpreted in a like fashion *(e.g.,* between versus directly between, adjacent versus directly adjacent, etc.).

The terminology used herein is for the purpose of describing particular implementations only and is not intended to be limiting of example implementations. As used herein, the singular forms a, an and the are intended to include the plural forms as well, unless the context clearly indicates otherwise. It will be further understood that the terms comprises, comprising, includes and/or including, when used herein, specify the presence of stated features, integers, steps, operations, elements and/or components, but do not preclude the presence or addition of one or more other features, integers, steps, operations, elements, components and/or groups thereof.

It should also be noted that in some alternative implementations, the functions/acts noted may occur out of the order noted in the figures. For example, two figures shown in succession may in fact be executed concurrently or may sometimes be executed in the reverse order, depending upon the functionality/acts involved.

Unless otherwise defined, all terms (including technical and scientific terms) used herein have the same meaning as commonly understood by one of ordinary skill in the art to which example implementations belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

Portions of the above example implementations and corresponding detailed description are presented in terms of software, or algorithms and symbolic representations of operation on data bits within a computer memory. These descriptions and representations are the ones by which those of ordinary skill in the art effectively convey the substance of their work to others of ordinary skill in the art. An algorithm, as the term is used here, and as it is used generally, is conceived to be a self-consistent sequence of steps leading to a desired result. The steps are those requiring physical manipulations of physical quantities. Usually, though not necessarily, these quantities take the form of optical, electrical, or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

In the above illustrative implementations, reference to acts and symbolic representations of operations (e.g., in the form of flowcharts) that may be implemented as program modules or functional processes include routines, programs, objects, components, data structures, etc., that perform particular tasks or implement particular abstract data types and may be described and/or implemented using existing hardware at existing structural elements. Such existing hardware may include one or more Central Processing Units (CPUs), digital signal processors (DSPs), application-specific-integrated-circuits, field programmable gate arrays (FPGAs) computers or the like.

It should be borne in mind, however, that all of these and similar terms are to be associated with the appropriate physical quantities and are merely convenient labels applied to these quantities. Unless specifically stated otherwise, or as is apparent from the discussion, terms such as processing or computing or calculating or determining of displaying or the like, refer to the action and processes of a computer system, or similar electronic computing device, that manipulates and transforms data represented as physical, electronic quantities within the computer system's registers and memories into other data similarly represented as physical quantities within the computer system memories or registers or other such information storage, transmission or display devices.

Note also that the software implemented aspects of the example implementations are typically encoded on some form of non-transitory program storage medium or implemented over some type of transmission medium. The program storage medium may be magnetic (e.g., a floppy disk or a hard drive) or optical (e.g., a compact disk read only memory, or CD ROM), and may be read only or random access. Similarly, the transmission medium may be twisted wire pairs, coaxial cable, optical fiber, or some other suitable transmission medium known to the art. The example implementations are not limited by these aspects of any given implementation.

## Claims

1. A method comprising:
receiving an image having a first dynamic range;
determining the first dynamic range fails to meet a criteria;
downsampling a region of the image;
blurring the downsampled region of the image;
upsampling the blurred region of the image;
generating a tone-mapping curve based on the upsampled image; and
generating a transformed image having a second dynamic range by transforming the image using the tone-mapping curve.

2. The method of claim 1, wherein
the first dynamic range is associated with a high dynamic range standard, and
the second dynamic range is associated with a standard dynamic range standard.

3. The method of claim 1 or claim 2, wherein determining the first dynamic range does not meet the criteria includes determining the first dynamic range is greater than a dynamic range of a display intended for display of the image.

4. The method of any of claim 1 to claim 3, further comprising:
determining an offset; and
applying the offset to the upsampled image.

5. The method of any of claim 1 to claim 4, wherein the generating of the tone-mapping curve includes generating a tone-mapping curve for each pixel of the upsampled image.

6. The method of claim 5, wherein the generating of the tone-mapping curve for each pixel includes:
generating a knee point for a selected pixel; and
generating the tone-mapping curve as a first curve to the knee point and a second curve after the knee point.

7. The method of claim 6, wherein the generating of the knee point includes:
determining a local maximum of luminance for the selected pixel; and
generating the knee point as log(local maximum of luminance).

8. The method of any of claim 1 to claim 7, wherein the downsampling of the region of the image includes downsampling a non-overlapping region of the image based on a logarithm of a maximum luminance.

9. The method of any of claim 1 to claim 8, wherein the transforming of the image includes:
computing an original luminance of a pixel of the image as a weighted sum of pixel's red, green and blue components;
applying the tone-mapping curve to the pixel luminance to generate a new luminance,
computing a ratio of the new luminance to an original luminance; and
multiplying the red, green and blue components by the ratio.

10. The method of any of claim 1 to claim 9, wherein the transforming of the image includes applying a gamut mapping algorithm to the transformed image.

11. A non-transitory computer-readable storage medium comprising instructions stored thereon that, when executed by at least one processor, are configured to cause a computing system to:
receive an image having a first dynamic range;
determine the first dynamic range fails to meet a criteria;
downsample a region of the image;
blurr the downsampled region of the image;
upsample the blurred region of the image;
generate a tone-mapping curve based on the upsampled image; and
generate a transformed image having a second dynamic range by transforming the image using the tone-mapping curve.

12. The non-transitory computer-readable storage medium of claim 11, wherein
the first dynamic range is associated with a high dynamic range standard, and
the second dynamic range is associated with a standard dynamic range standard.

13. The non-transitory computer-readable storage medium of claim 11 or claim 12, wherein determining the first dynamic range does not meet the criteria includes determining the first dynamic range is greater than a dynamic range of a display intended for display of the image.

14. An apparatus comprising:
a camera configured to generate a first image having a first dynamic range;
a display configured to display a second image having a second dynamic range; and
a processor configured to:
downsample a region of the first image;
blurr the downsampled region of the first image;
upsample the blurred region of the first image generate a tone-mapping curve based on the upsampled image;
transform the first image using the tone-mapping curve to generate the second image; and
render the second image on the display.

15. The apparatus of claim 14, the processor further configured to:
receive a trigger to store the first image; and
cause the first image to be stored in a memory associated with the apparatus.
